(19)

Europäisches
Patentamt
European
Patent Office
Office européen
des brevets

(11) **EP 2 927 875 A2**

(12) **EUROPEAN PATENT APPLICATION**

(43) Date of publication:
**07.10.2015 Bulletin 2015/41**

(51) Int Cl.:
***G06T 9/00*** *(2006.01)*

(21) Application number: **15161444.3**

(22) Date of filing: **27.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.03.2014 SI 201400125**

(71) Applicant: **University of Maribor
2000 Maribor (SI)**

(72) Inventors:
• **Lipus , Bogdan
2317 Oplotnica (SI)**
• **Zalik, Borut
2351 Kamnica (SI)**

(74) Representative: **Plougmann & Vingtoft A/S
Rued Langgaards Vej 8
2300 Copenhagen S (DK)**

(54) **Method for progressive lossless light detection and ranging (LiDAR) data compression**

(57)    This invention considers a method for the lossless progressive compression of measurement data, obtained by the airborne Light detection and ranging (LiDAR) scanning. The procedure presented by this invention consists of the several steps: the determination of bounding box, dividing the bounding box into the 2D grid, defining the levels of grid lines, defining the levels of data points, distributing the points into the corresponding arrays, and storing the arrays by using compression method. The method performs the arrangements of the LiDAR data in the hierarchical levels without preprocessing in one pass due to the expected large sizes of data files.

FIG. 1

## Description

## Field of the invention

This invention relates to data processing in relation to airborne Light Detection and Ranging (LiDAR). In particular, the invention relates to a process of organizing data gathered by the airborne LiDAR technology to support progressive lossless data compression and decompression.

## Background of the invention

Light detection and ranging (LiDAR) is an active remote sensing technology, which in some variants determines distances to targets from a time delay between transmitted and reflected light beam (see for example US 7746449 and US 7701558). The intensity and the number of reflections can also be obtained from the reflected beam (US 7187452). LiDAR technology has been applied in various fields, as for example geography, geology, geomorphology, archaeology, seismology, atmospheric physics, and laser altimetry.

LiDAR has been demonstrated successfully with wide range of targets including rocks, vegetation, metallic and non-metallic manmade objects, chemical compounds, aerosols and atmosphere. Ultraviolet, visible, or near infrared light may be used in LiDAR scanners. Due to the short wavelength of light, compared e.g. to other types of electromagnetic radiation, a high resolution may be achieved. LiDAR scanners are frequently mounted on aircrafts, helicopters and even on satellites; such airborne LiDAR systems are e.g. used to gather information about Earth's surface. The actual position of the LiDAR scanner at the airborne platform may be determined with the global positioning system (GPS), while an inertial measurement unit (IMU) may be used to monitor roll, pitch and heading of the aircraft to determine the angular orientation of the LiDAR scanner. From this information, a precise xyz-position of the hit target can be calculated in one of the geographical coordinate system (for example Universal Traverse Mercator coordinate system or Gauss-Kruger coordinate system). Up to 200.000 measurements per seconds have been achieved at the airborne platforms.

The airborne LiDAR data are stored in data files according to a file format. A commonly used data format is an open (i.e. non-proprietary) industrial standard defined as 'LAS specification', announced by The American Society for Photogrammetry & Remote Sensing (ASPRS). The specification defines a binary file format LAS (LASer), where, at the moment, five versions exist: LAS 1.0 to LAS 1.4. However, the differences between versions are minor and all contain information about xyz-coordinates with the associated values as intensity of reflected signal, the reflection number, the classification indicator, the color of point and similar. Typical LAS file contains tens of millions of points resulting in few gigabytes per square kilometer. Such large files cannot at present be sent through the communication channels due the limitation in bandwidth to support the interactive visualization and data processing. Because of this, a progressive compression for LiDAR data would be advantageous.

Data compression is a long-lasting discipline in computer sciences. U.S. Patents Nos. 5,418,532, 5,546,080, and 7,737,870 considers some of many general purpose compression methods. A corpus of large variety of methods are collected in David Salomon 'Data Compression: The Complete Reference', Springer Verlag, Berlin, 2007. However, the general purpose algorithms are not efficient enough for processing LiDAR data and therefore, domain specific algorithms have been introduced. In the continuation, patents and other related work considering LiDAR data compression is considered.

U.S. Patents Nos. 5,793,371 presents a compression of three-dimensional data using the generalized triangular mesh. The sequence of points being linked in 3D triangulation mesh serves for determination of the order, how the points are processed. The positions of the points are then coded with the Huffman coding ("A Method for the Construction of Minimum-Redundancy Codes", Proc. of the I.R.E., pp. 1098-1102, 1952). There are several other methods that accomplish geometrical data compression, for example U.S. Pat. Nos. 5,793,371; 5,867,167; 5,870,094; 6,239,805; 6,314,205; and Publication Nos. WO/2000/077740 and US 2002050992. Such methods are however not appropriate for compression LiDAR data, because the input sequence of point is difficult to be linked in 3D triangular mesh and because this sequence of points is very large and, consequently, it is difficult to process. Therefore, a specific compression method that is efficient for compressing geometrical data considering also the topology of the data would be advantageous.

In Pradhan, Kumar, Mansor, Ramli and Sharif, Light Detection and Ranging (LiDAR) data compression, KMITL Science and Technology Journal, pp. 515-526, 2005, a method for lossy LiDAR data compression is presented. The method uses Delaunay triangulation to approximate a surface, determined by the LiDAR points. This surface is then compressed by second generation wavelets.

Wiman and Quin, Fast Compression and Access of LiDAR Point Clouds Using Wavelets, Joint Urban Remote Sensing Event, pp. 718-723, 2009 discloses application of wavelet transformation for compression of points obtained by LiDAR scanner. The transformation is applied independently in each of the xyz-coordinate directions. After wavelet transformation is applied, the consecutive LiDAR points have similar coefficients in the output vector, which can then allegedly be efficiently compressed. As the quantization is applied, the approach is lossy. The method compresses only the xyz-coordinate of points, the remaining values stored in the LAS file are not considered.

Mongus and Žalik, »Efficient method for loss-less LiDAR data compression«, International Journal of Remote Sensing, 32 (9), 2011, pp. 2507-2518, proposed a lossless non-progressive method that uses an efficient prediction model for LAS files. Each of the point attributes are independently coded using the following steps: a predictive coding, a variable-length coding, and arithmetic coding. The predictive coding utilizes the geometric correlation amongst the coordinates of consecutive points. The differences between the original and the predicted values are usually very small, and therefore, they can be compressed efficiently.

Isenburg, Laszip: Lossless compression of LiDAR data, Photogrammetric Engineering and Remote Sensing, 79(2), pp. 209-217, 2013 proposed another method for LiDAR data compression based prediction, variable length coding and arithmetic compression.

Lipuš and Žalik, Lossy LAS file compression using uniform space division, Electronics Letters, 48(20), pp. 1278-1279, 2012, developed an approach for lossy LiDAR data compression. By eliminating point in regions of more dense point sampling and with moving of the remaining points, better compression ratio than other methods regarding the same number of points on the square meter are reported.

A commercial product for compression of LAS files is offered by LizardTech™ (http://www.lizardtech.com). The product supports lossless and lossy compression. However, details about the method are not known.

## Summary of the invention

A main objective and goal of the presented invention is to achieve a method for progressive compression of data files obtained by airborne laser scanning (LiDAR), such as LAS files, which allow gradual transfer of compressed data; firstly small quantities, which represent data at a lower resolution, and then remaining data that add additional details for viewing and processing at higher resolution. The invention is especially useful in transmission of LiDAR data through the networks with limited bandwidth.

Objectives of the invention are achieved by a method for progressive compression of LiDAR data, obtained from laser scanning and stored in a data file. The method comprising applying a two-dimensional hierarchical grid to input data points stored in the data file. The method further comprising distributing the input data points into arrays of various levels. Finally, the method comprises storing and compressing each of the arrays of various level separately, using well-known coding methods. In this way, the typically huge amount of data obtained, may be processed adequately to support progressive transmission of data through communication channels, e.g. to a ground facility. At the progressive transmission, the data is prepared in the way that only a small part of it is sufficient for the rough visualization and preliminary processing in contrary to the conventional way, where the data have to be received entirely before they can be displayed and/or processed. Actually, the information is stored in different resolutions. The transmission starts with the lowest resolution requiring only a small amount of data, which are then gradually complete with adding remaining data.

In embodiments of the method according to the invention, a bounding box around the input data points is recursively divided uniformly into the two-dimensional grid, whose grid-lines are assigned levels according to a depth of recursion i.e. number of successive divisions of the bounding box. As the data files are usually very large, preprocessing of file data should be avoided. By applying a two-dimensional grid, which is used to distribute the points from the input data file into arrays of points arranged in different levels preprocessing may be avoided. The arrays of data points at each level represent the data at a specific resolution. The arrays at the highest level contain the points that represent the lowest resolution, while the remaining lower level arrays store the higher resolution data. Our invention effectively distributes the input data points with the associated data into the hierarchically organized arrays of points, which may then be progressively transmitted while still achieving efficient compression and storage. The distribution of the input data points takes into account also the characteristics of data point attributes, such as data types. Therefore, it allows most favorable data compression for this type of data.

In embodiments of the method according to the invention, each of the input data points from the data file are distributed into arrays corresponding to the level of the input data point, the level being assigned according to a position of the considered point in the two-dimensional grid.

In embodiments of the method according to the invention, the level of the considered data point is determined from the grid lines that bound the considered grid cell within which the data point lie and the position of the grid cell of previously considered data point.

In embodiments of the method according to the invention, the arrays of points with equal level are stored in order from higher to lower levels,

In embodiments of the method according to the invention, the arrays of points of the higher levels are stored using variable-length coding and arithmetic coding.

In embodiments of the method according to the invention, the arrays of point of the lower levels are stored using also the prediction of values from non-progressive compression schema, variable-length coding, arithmetic coding.

In an embodiment of the method according to the invention, the data file is a standardized LAS file.

Correspondingly, in this embodiment data points are LAS points.

In an alternative embodiment of the method, the data file is a raw (ASCII) file. This file format is also commonly used for storing LiDAR measurement data.

## Brief description of the drawings

Features and advantages of the present invention will be described in reference to the following accompanying drawings, where:

Fig. 1 is a block diagram illustrating the basic data flow in the process of progressive compression of the LiDAR data;

Fig. 2 is a detail block diagram illustrating the phases in the process of progressive compression of the LiDAR data;

Fig. 3 shows the recursive division of the bounding box into the grid and defining the levels of the gridlines;

Fig. 4 is an example of 16 input LAS points, distributed in the 2D grid;

Fig. 5 shows the distribution of the 16 LAS points from example in Fig. 5 into the lists of points with equal levels ($L_0$, ..., $L_n$).

## Detailed description

This section provides details on embodiments of lossless progressive data file compression according to the method of the invention. The inventive method is exemplified by compression of a LAS file, but the inventors note that other types of LiDAR data files may also advantageously be compressed using the method. Thus, the invention is not to be construed as limited to compression of LAS files.

In overview, the invention comprises a method for progressively compressing LiDAR data stored in a data file without pre-processing comprising:

1. A bounding box containing all considered data points is firstly obtained and recursively divided by the grid-lines into four equal parts named grid cells. In this way, grid-lines in each coordinate direction are inserted and the corresponding levels are assigned.

2. After forming grid-cells bounded by grid-lines, the points from the data file are arranged into different levels and put in the arrays of points with the same level.

3. The arrays of data points are then compressed and stored from the higher to the lower levels. The successive points from the arrays of the higher levels are compressed by a variable length coding and arithmetic coding. The arrays at the lower levels containing the larger sets of points are close enough that the prediction is applied before variable length coding and arithmetic coding.

The presented invention constructs a hierarchical data model, where each level contains a set of points. The number of points increases from the higher levels to the lower ones. In this way the higher levels represent data at lower resolutions that are progressively improved by adding points from the lower levels. In order to avoid pre-processing data files, the number of levels may heuristically be estimated in advance as:

$$n_{e=} \lceil 0.5 \ \log_2 M \rceil,$$

where M represents the number of points in the data file. However, the present inventive method may also be useful if the number of levels is chosen and/or calculated in other ways.

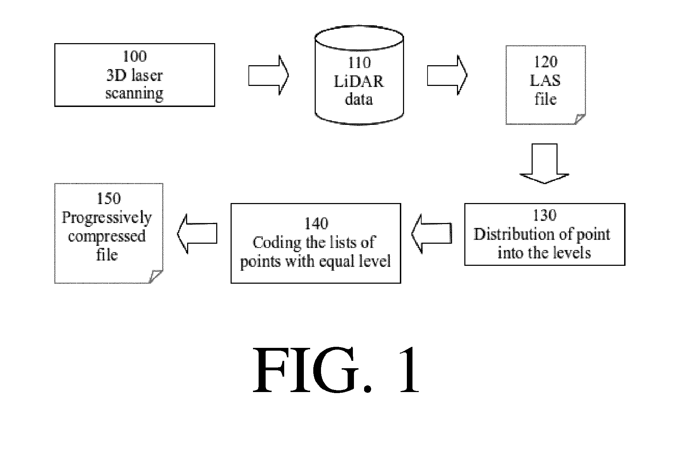

The block diagram in Fig. 1 represents the basic flow in the process of progressive data file compression, as exemplified by a LAS file. After laser scanning at block **100,** the LiDAR data at block **110** are stored in the LAS file at the block **120.** At the step **130,** the distribution of the LAS points into the levels is performed. After distribution, at the step **140,** the arrays of points with equal level are coded and stored in the output file at the step **150.**

The set of points at a particular level has to be chosen simple enough that the algorithm can efficiently cope with the larger number of points. The most important constraint is the fact that the scanned points are stored in the LAS file according to the GPS time. Therefore, better results can be achieved if the order of the input points is preserved. This limits the possibilities of how to arrange the points into levels.

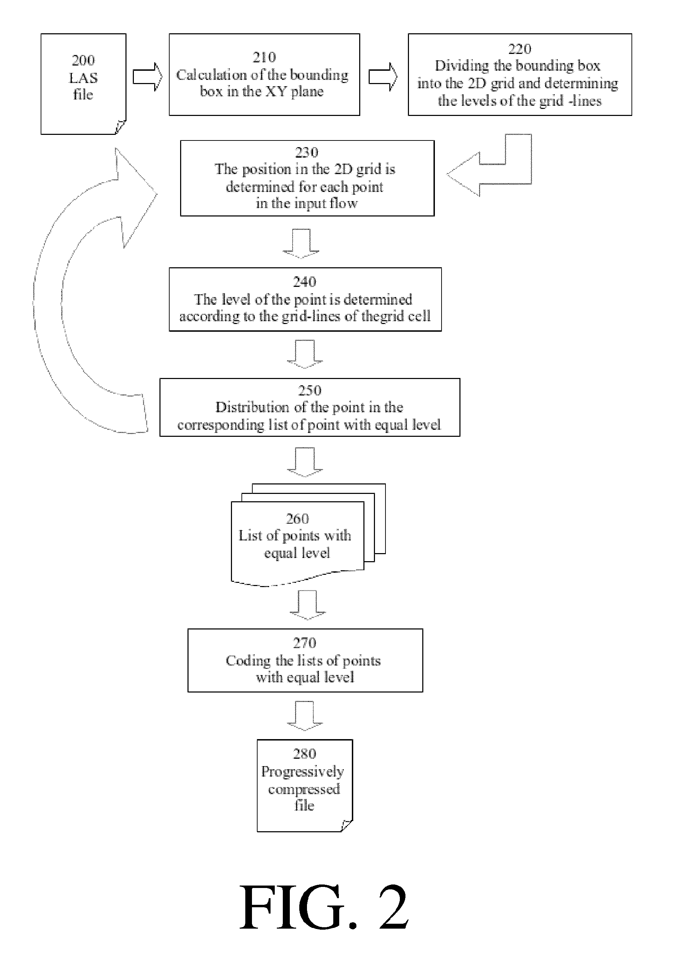

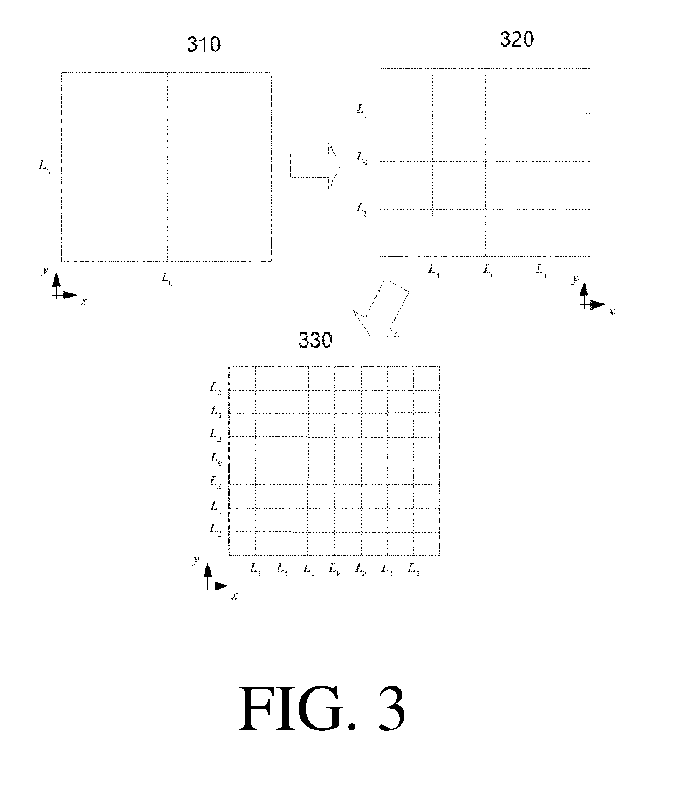

The invention of progressive compression of LAS file at the block **200** consists from the following steps, which are semantically shown in Fig. 2. At the step **210,** a bounding box containing all considered points is obtained from the LAS file header. At the block **220,** the bounding box is divided by the grid-lines into four equal parts named grid. The dividing process continues until the termination criterion (heuristically estimated number of levels) is met. In this way, grid-lines in each coordinate direction are inserted and the corresponding levels $L_0$, $L_1$, ..., $L_n$ are assigned to them (n is the depth of the recursion which is determined by choosing a number of desired levels. The detail presentation of the step **220** is shown in Fig. 3. The grid after the first recursion is shown at the step **310.** The second and the third steps are at **320** and **330,** respectively.

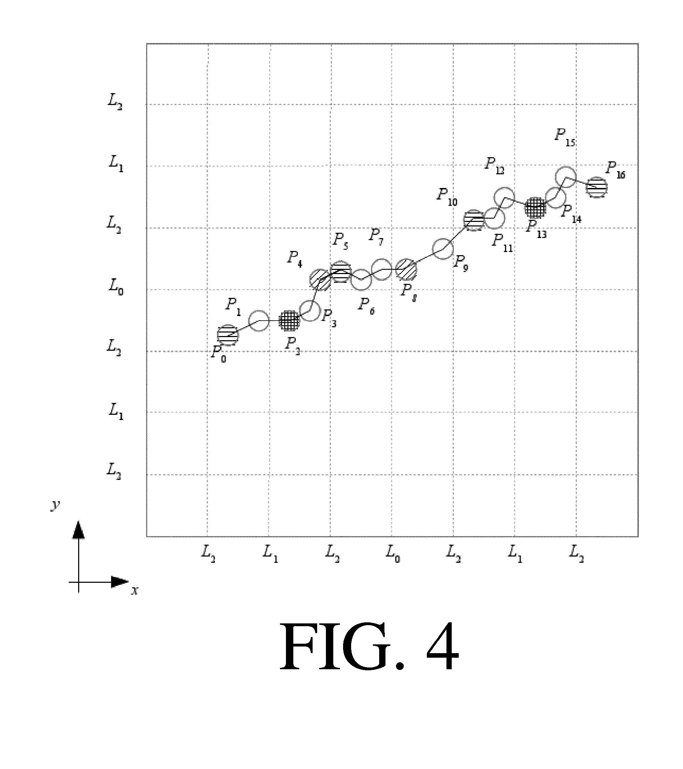

After forming grid-cells bounded by the grid-lines, the points from the LAS file can be arranged into different levels. For each point from the input file the steps **230, 240** and **250** are performed. At the beginning, the grid cell containing the first point from the LAS file is determined. Each grid cell is defined by four grid-lines (left, right, top and bottom). The level of the first point is determined as the level of the left line of the considered grid cell (for example, the level of the point $P_0$ in Fig. 4 is $L_2$).

Next, the levels of the following points are determined as:

If the next point is located in the same grid cell, then it is allocated in the lowest ($L_n$) level (point $P_1$ in Fig. 4 gets level $L_n$).

If the next point is not located in the same grid cell as previous point, the grid cell containing the next point is determined. If the new grid cell lies on the left-side from the previous cell, the level of the next point is determined according to the level of the right grid-line. Similarly, if the new grid cell lies on the right-side from the previous cell, the level of the next point is determined as the level of the left grid-line (the level of the point $P_2$ in Fig. 4 becomes $L_1$ in this way). If the position of the new grid cell in the x direction remains the same, then the y direction is used. Thus, if the new grid cell is on the top-side of the previous cell, the level of the considered point is determined as the level of the bottom grid-line. Similarly, if the new grid cell lies on the bottom-side in regards to the previous cell, the level of the point is determined as the level of the top grid-line (the level of the point $P_4$ in Fig. 4 is $Po$).

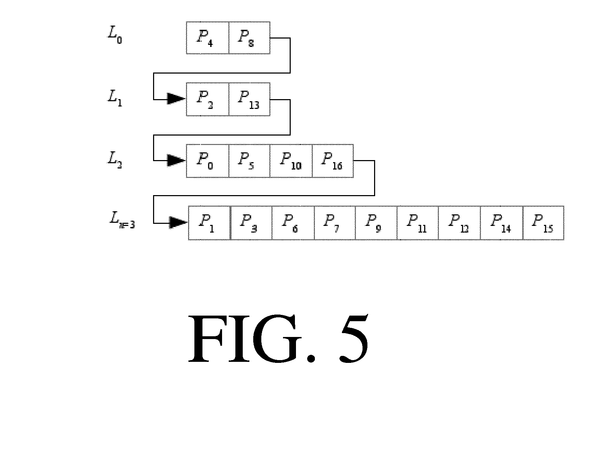

At the step **260,** the points, after being arranged in the levels, are stored in arrays, as schematically shown in Fig. 5. As already mentioned, the points in the arrays remain sorted according to GPS time, and may therefore be compressed simply and efficiently. Furthermore, the point coordinates have also been arranged into levels in way that is very convenient for compression. It can be expected that the distances in the x direction between two successive points within the same level are very similar (see, for example, points $Po$, $Ps$, $P_{10}$ and $P_{16}$ in Fig. 5) and approximately equal to the distances between the grid-lines at the considered level. As the difference between these distances is small, it can be compressed efficiently. The arrays of LAS points are then compressed and stored in order from the higher ($L_0$) to the lower levels ($L_n$). The successive points from the arrays of the higher levels may be compressed by a variable length coding and arithmetic coding. The arrays at the lower levels containing the larger sets of points are close enough that the prediction model proposed by Mongus and Zalik in their method of lossless non-progressive compression, »Efficient method for lossless LiDAR data compression«, International Journal of Remote Sensing, 32 (9), 2011, pp. 2507-2518, is applied before variable length coding and arithmetic coding. At the block **270,** the progressively compressed file is obtained.

**Claims**

1. A method for progressive compression of LiDAR data, obtained from laser scanning and stored in a data file, the method comprising:

   - applying a two-dimensional hierarchical grid to input data points stored in the data file;
   - distributing the input data points into arrays of various levels;
   - storing and compressing each of the arrays of various level separately, using well-known coding methods.

2. The method of claim 1 wherein a bounding box around the input data points is recursively divided uniformly into the two-dimensional grid, whose grid-lines are assigned levels according to a depth of recursion i.e. number of successive divisions of the bounding box.

3. The method of claim 2 wherein each of the input data points from the data file are distributed into arrays corresponding to the level of the input data point, the level being assigned according to a position of the considered point in the two-dimensional grid.

4. The method of claim 3 wherein the level of the considered data point is determined from the grid lines that bounds the considered grid cell within which the data point lie and the position of the grid cell of previously considered data point.

5. The method according to any one of claims 1-4 wherein the arrays of points with equal level are stored in order from higher to lower levels.

6. The method of claim 5 wherein the arrays of points of the higher levels are stored using variable-length coding and arithmetic coding.

7. The method according to claims 5 or 6, wherein the arrays of points of the lower levels are stored using also the prediction of values from non-progressive compression schema, variable-length coding, arithmetic coding.

8. The method according to any one of the preceding claims, wherein the data file is a standardized LAS file.

# FIG. 1

200
LAS
file

210
Calculation of the bounding
box in the XY plane

220
Dividing the bounding box
into the 2D grid and determining
the levels of the grid -lines

230
The position in the 2D grid is
determined for each point
in the input flow

240
The level of the point is determined
according to the grid-lines of thegrid cell

250
Distribution of the point in the
corresponding list of point with equal level

260
List of points with
equal level

270
Coding the lists of points
with equal level

280
Progressively
compressed
file

# FIG. 2

FIG. 3

FIG. 4

$L_0$ | $P_4$ | $P_8$

$L_1$ | $P_3$ | $P_{13}$

$L_2$ | $P_0$ | $P_5$ | $P_{10}$ | $P_{16}$

$L_{n=3}$ | $P_1$ | $P_3$ | $P_6$ | $P_7$ | $P_9$ | $P_{11}$ | $P_{12}$ | $P_{14}$ | $P_{15}$

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7746449 B
- US 7701558 B
- US 7187452 B
- US 5418532 A
- US 5546080 A
- US 7737870 B
- US 5793371 A
- US 5867167 A
- US 5870094 A
- US 6239805 A
- US 6314205 A
- WO 2000077740 A
- US 2002050992 A

### Non-patent literature cited in the description

- **DAVID SALOMON.** Data Compression: The Complete Reference. Springer Verlag, 2007
- **HUFFMAN.** A Method for the Construction of Minimum-Redundancy Codes. *Proc. of the I.R.E.,* 1952, 1098-1102
- **PRADHAN ; KUMAR ; MANSOR ; RAMLI ; SHARIF.** Light Detection and Ranging (LiDAR) data compression. *KMITL Science and Technology Journal,* 2005, 515-526
- **WIMAN ; QUIN.** Fast Compression and Access of LiDAR Point Clouds Using Wavelets. *Joint Urban Remote Sensing Event,* 2009, 718-723
- **ISENBURG.** Laszip: Lossless compression of LiDAR data. *Photogrammetric Engineering and Remote Sensing,* 2013, vol. 79 (2), 209-217
- **MONGUS ; ZALIK.** their method of lossless non-progressive compression, »Efficient method for lossless LiDAR data compression. *International Journal of Remote Sensing,* 2011, vol. 32 (9), 2507-2518